# EUROPEAN PATENT APPLICATION

(11) **EP 2 672 076 A2**
(43) Date of publication of application: **11.12.2013**
(21) Application number: 13170618.6
(22) Date of filing: 05.06.2013
(51) Int. Cl.: F01D 25/00, F01D 21/00, F02C 7/232

(54) **Method for Shutting Down a Generator to Prepare the Generator for Restart**

(30) Priority: 06.06.2012 US 201213490091
(71) Applicant: General Electric Company, Schenectady, New York 12345 (US)
(72) Inventor: Snider, David August, Greenville, SC South Carolina 29615 (US); Alexander, Michael Joseph, Greenville, SC South Carolina 29615 (US); Brooks, Robert Lester, Greenville, SC South Carolina 29615 (US); Caratini, Elsie Angelly, Greenville, SC South Carolina 29615 (US); Dutka, Michael James, Greenville, SC South Carolina 29615 (US); Morawski, Christopher John, Schenectady, NY New York 12345 (US); Post, Eugene Armstead, Schenectady, NY New York 12345 (US)
(74) Representative: Cleary, Fidelma

(57) **Abstract**

A method and apparatus for shutting down a generator (100) to prepare the generator for restart is disclosed. A power down sequence of a gas turbine (102) of the generator is initiated from an operating state. A purge gas is forced into the gas turbine (102) to extinguish a combustion flame in the gas turbine (102). The purge gas is swept through the gas turbine (102) to displace the fuel from the gas turbine using a coast down airflow through the gas turbine (102) during the power down sequence to prepare the generator for restart.

## Description

The subject matter disclosed herein relates to methods and apparatus for shutting down a gas turbine generator for a fast restart. Gas turbine generators, which are often used in combined cycle power plants, are often shut down and started up depending on the demand for electricity, which is constantly fluctuating. Once a generator is shut down, a series of tests and preparatory steps are performed before the generator can be restarted. In one such preparatory step, residual combustible gas is purged from the generator. Prior methods for purging the residual combustible gas are initiated after the generator has come to a complete stop. Such purge methods limit how soon the generator can be returned to full power after shutdown. Therefore, the present disclosure provides a method of shutting down a generator that places the generator in a "ready to start" condition in a reduced amount of time.

According to one aspect of the disclosure, a method of shutting down a generator to prepare the generator for restart is provided, the method including: initiating a power down sequence of a gas turbine of the generator from an operating state; forcing a purge gas into the gas turbine to extinguish a combustion flame in the gas turbine; and sweeping the purge gas through the gas turbine to displace the fuel from the gas turbine using a coast down airflow through the gas turbine during the power down sequence to prepare the generator for restart.

According to another aspect of the disclosure, a generator is provided that includes: a combustion chamber; a fuel system coupled to the combustion chamber configured to provide a purge gas to extinguish a combustion flame in the combustion chamber; and a source of the purge gas configured to provide the purge gas to the fuel system, wherein the purge gas displaces fuel remaining in the generator after the combustion flame is extinguished during a shutdown sequence of the generator, wherein the purge gas is swept through the generator using a coast down airflow of the generator.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 shows an exemplary combined gas turbine/heat recovery steam generator (GT/HRSG) system of the present disclosure generally used to generator power such as electrical power in a combined cycle power plant;
FIG. 2 shows a detailed illustration of the exemplary fuel system 106 of FIG. 1; and
FIG. 3 shows an exemplary shutdown and startup sequence for providing a ready to start condition according to an exemplary embodiment of the present disclosure.

The detailed description explains embodiments of the invention, together with advantages and features, by way of example with reference to the drawings.

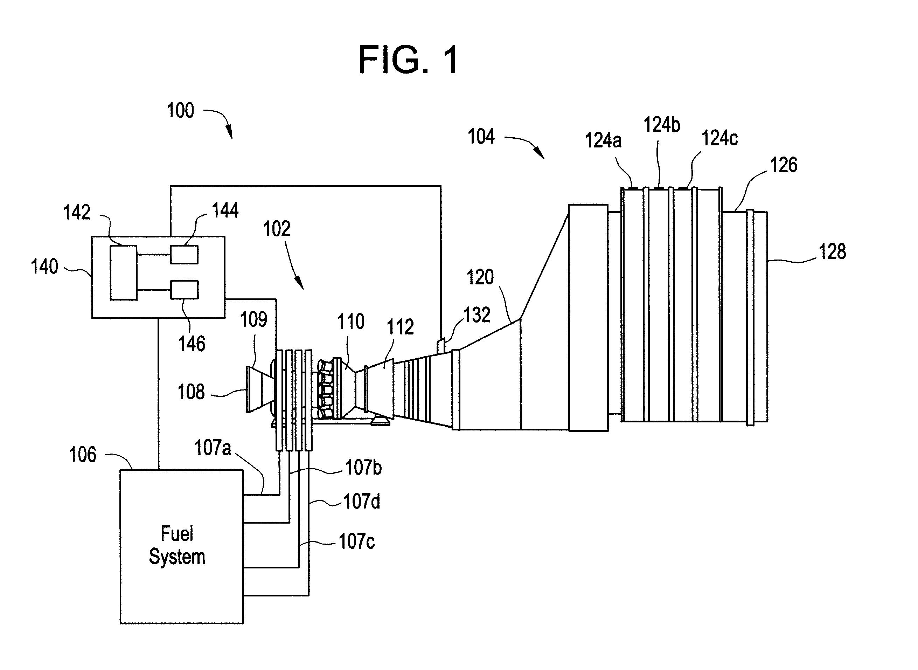

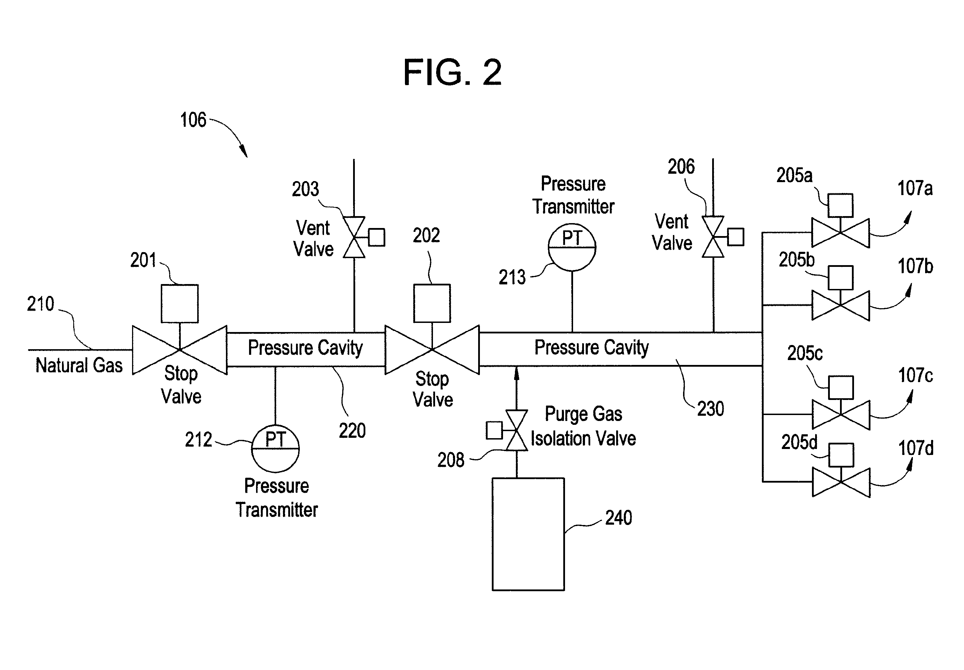

FIG. 1 shows an exemplary combined gas turbine/heat recovery steam generator (GT/HRSG) system 100 of the present disclosure generally used to generator power such as electrical power in a combined cycle power plant. The exemplary GT/HRSG system 100 includes a gas turbine (GT) 102, a heat recovery steam generator (HRSG) 104 and a fuel system 106. The fuel system 106 generally provides fuel to the gas turbine for combustion and is discussed in detail with respect to FIG. 2. As shown in FIG. 1, four fuel lines 107a, 107b, 107c and 107d provide fuel from the fuel system 106 to the gas turbine 102. The number of fuel lines is not meant as a limitation of the disclosure and any number of fuel lines can be used in various embodiments of the disclosure.

The exemplary gas turbine 102 typically includes a compressor section 108, a combustion section 110 and a turbine section 112. The compressor section includes a series of compressor stages, each stage including a plurality of compressor blades that rotate to compress air. The compressor section 108 generally receives ambient air at an inlet to the compressor section, compresses the air at the compressor stages and provides the compressed air at the outlet of the compressor section to the combustion section 110. An inlet guide vane 109 at the inlet can be opened and closed to regulate a flow of air through the compressor section 108. In the combustion section 110, fuel from the fuel system 106 is mixed with the compressed air from the compressor. The air/fuel mixture is then ignited using an ignition device such as a spark plug to create a working gas. The working gas is directed through the turbine section 112. The turbine section 112 is made up of a serial arrangement of stages, each stage having rotating blades known as buckets. The rotating buckets are supported by a common rotary shaft. The working gas exiting the combustion section 110 expands through the serial stages to cause rotation of the buckets and therefore of the rotary shaft. In one aspect, the rotary shaft of the turbine section 112 can be connected to the compression blades in the compressor section so that rotation of the rotary shaft drives air compression in the compressor section 108. The rotary shaft also extends beyond the turbine section to an electric generator (not shown) where the rotary motion of the rotary shaft is converted into electrical power. Meanwhile the exhausted working gas from the turbine section 112 is directed toward the HRSG 104.

The HRSG 104 receives exhaust from the gas turbine and uses the exhaust as a heat source to drive one or more steam turbines. The HRSG includes an inlet 120, a high pressure superheater 122 and one or more HSRG pressure sections124a, 124b and 124c, which are operable to generate steam at high pressure, intermediate pressure and/or low pressure, respectively. Exhaust gas from the HRSG is sent through HRSG outlet duct 126 to an exhaust stack 124.

In an exemplary embodiment, the gas turbine 102 and fuel system 106 are coupled to a control unit 140 configured to control various elements of the fuel system and gas turbine. The control unit 140 includes a memory 144, a set of programs 146 storing instructions therein for shutting down the generator according to the methods described herein, and a processor 142 having access to the set of programs 146 and to the contents of the memory 144. The processor 142 is configured to run various programs of the present embodiment for shutting down the gas turbine and completing a displacement of remaining fuel in the gas turbine manifolds, exhaust, and attached equipment, among others. The control unit can control valve configurations at the fuel system 106 as well as monitor various parameters, such as pressure at the fuel system 106, gas levels in the gas turbine 102, etc. A monitoring device 132 is coupled to the generator. In one embodiment, the monitoring device 132 generates a trip signal to the control unit 140 wherein a fault occurs at the generator. The trip signal can be used to initiate a trip of the generator to shut down the generator.

FIG. 2 shows a detailed illustration of the exemplary fuel system 106 of FIG. 1. The fuel system 106 comprises a piping configuration including pressure cavities 220 and 230 for supplying fuel to the gas turbine 102. The two pressure cavities 220 and 230 are in fluid communication with each other by a series of valves, which control the flow therebetween and, when operated in concert with each other, permit fuel to flow to the gas turbine 102 in a controlled manner to allow an operation of the combined cycle power plant.

Pressure cavity 220 has a valve 201 on one side of the pressure cavity 220 that connects the pressure cavity 220 to a fuel inlet line 210 and permits flow therebetween. A vent valve 203 is connected to the pressure cavity 220 and allows the pressure cavity 220 to be vented to an appropriate venting receptacle when necessary. Valve 202 connects pressure cavity 220 to pressure cavity 230 and permits flow therebetween.

Pressure cavity 230 comprises several exemplary gas control valves 205a, 205b, 205c and 205d, which connect the pressure cavity 230 to respective fuel lines 107a, 107b, 107c and 107d. While the exemplary pressure cavity 230 as illustrated in FIG. 2 comprises four such gas control valves, the pressure cavity 230 can include any number of gas control valves in alternate embodiments. Pressure cavity 230 further includes a vent valve 206 for venting of the pressure cavity 230 to an appropriate venting location when necessary. The vent valve 206 can be a single valve in one embodiment or can comprise a configuration of multiple vent valves in an alternate embodiment. Pressure cavity 230 also includes an isolation valve 208 that can be opened to allow a purge gas to enter into the pressure cavity 230 from an exemplary purge gas supply system 240. The purge gas forces fuel isolated in pressure chamber 230 into the combustion flame. The purge gas is thus forced through the pressure cavity 230 to the generator to extinguish a flame at the combustor. The purge gas then displaces fuel remaining in the generator from the generator system of FIG. 1. Additionally, the purge gas can be used to perform a tightness test of various valves of the fuel system 106.

Pressure cavities 220 and 230 further include various exemplary pressure gauges 212 and 213 respectively coupled thereto. The control unit 140 of FIG. 1 can be coupled to the various pressure gauges to monitor the pressures at the pressure cavities 220 and 230. The control unit 140 can be used to monitor operating conditions of the fuel system during various operational stages, such as during online operation, during a shutdown sequence, during a startup sequence, during a purge sequence, after establishing a purge credit as described below, etc. Although two pressure gauges 212 and 213 are shown in FIG. 2 this is only meant for illustrative purposes and is not meant as a limitation of the disclosure. Pressure gauges can also be coupled to the various vent valves, gas control valves, isolation valves and stop valves of an exemplary fuel system and measurements obtained at these pressure gauges can be provided to the control unit 140 for monitoring and/or processing.

The valves of the fuel system 106 can be opened and closed according to any appropriate valve setting configuration. The valves, as embodied by the disclosure, either alone or collectively, can comprise rotary valves, gate valves, stem valves, butterfly valves, ball valves, choke valves, or any other valve configuration. Further, valves of the fuel system 106 can be controlled by any appropriate means, such as solenoid, manual, sensor controlled, remotely controlled or any other appropriate control, so the valves work as intended. In one configuration, valve 202 is closed to isolate fuel in the pressure chamber 230 and purge gas isolation valve 208 is opened to introduce the purge gas into the pressure 230. With valves 205a-205d open, the fuel is forced into the combustion chamber via the purge gas.

Purge gas supply system 240 supplies a gaseous medium such as a purge gas to the fuel system in one embodiment of the present disclosure. The purge gas can be supplied from the power plant or from a dedicated system. The dedicated purge gas supply system 240 includes but is not limited to components to isolate, control pressure, prevent backflow, provide filtering of particulates, remove moisture and provide indication of successful operation to the controller. In one valve configuration of the fuel system, the gaseous medium can be used for a tightness test of the valves of the fuel system. In another valve configuration of the fuel system, the purge gas can be used to force fuel from the fuel supply and to extinguish a flame at the combustor section. The purge gas at the combustor purges the gas turbine and/or HRSG of volatile fuel remaining in the gas turbine/HRSG after extinguishing the flame.

The present disclosure provides a method of shutting down a generator system in order to be in a ready state for restart, e.g. a "ready to start" condition, within a reduced amount of time from shutdown. A "ready to start" condition is a general indication that combustible gases are substantially diluted and/or removed from the generator and that the generator systems are in a desired state for start up of the generator. A "ready to start" condition can also involve removal of risks associated with remaining fuel in the gas turbine components, exhaust, and downstream equipment, placing the fuel system in a specific startup configuration, completing a leak test of the fuel system, securing the fuel system to a standby condition, and monitoring conditions after establishing the desired conditions.

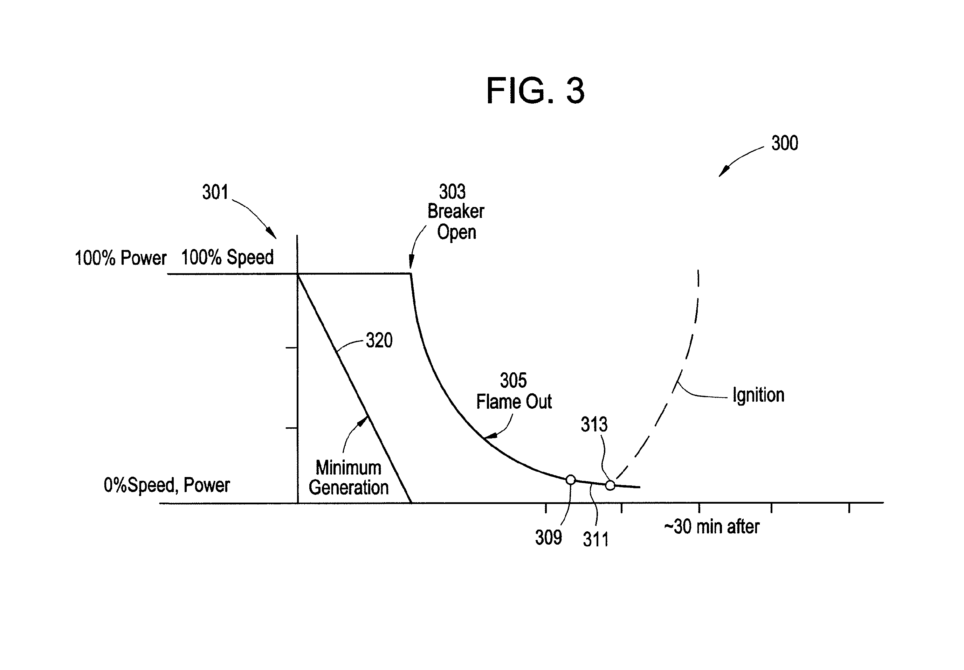

FIG. 3 shows an exemplary shutdown and startup sequence in an exemplary embodiment of the present disclosure. In one aspect of the generator shutdown, the purge gas displaces remaining fuel from the generator components into the compressor coast down air flow during the shut down sequence of the generator. Coast down airflow generally refers to air flowing through the generator/combustor due to the residual (unpowered) rotation of the turbine blades of the turbine section and/or the coupled compressor blades of the compressor section after extinguishing of the combustion flame, known as flame-out, during shutdown of the generator. An inlet guide vane 109 of the gas turbine generator can be substantially closed upon shutdown or tripping of the gas turbine generator. The inlet guide vane 109 can be operated to provide an air flow for purging combustible gas from the gas turbine generator. In one aspect, the shutdown sequence includes at least the steps of 1) "flame-out" or extinguishing the combustor flame, 2) testing of valves in the fuel system, 3) displacing and diluting remaining fuel through the generator using the coast down airflow to purge remaining fuel from the generator, and 4) isolating a fuel for restart at the fuel system. In one embodiment, these steps can be monitored by control unit 140 to ensure that the gas turbine 102 is prepared for a startup sequence.

In one embodiment, the generator is shut down as part of a planned shut down sequence. In a planned shutdown sequence, time 301 indicates a time at which the generator is taken offline. Line 320 indicates the amount of power contributed from the generator to an attached power grid. Once the generator power is reduced to a designated setting (at time 303), a breaker to the generator is opened to initiate the planned shut down sequence of the gas turbine. In an alternate embodiment, the generator is shut down due to a trip sequence. The generator can be tripped when a fault is detected. Thus, in a trip sequence, the breaker may be opened (time 303) simultaneously with taking the generator offline. In either sequence, at 303, fuel flow to the combustion section 110 is reduced to a specified setting to support the combustion flame. In addition, the fuel supply is isolated in pressure cavity 230 by closing valve 202. Purge gas isolation valve 208 is opened to provide a purge gas that pushes the isolated fuel supply from the pressure cavity 230 into the combustor. During the shutdown sequence, turbine blades and compressor blades (still rotating) provide a coast down airflow flowing through the generator. The combustion flame may be extinguished (at flame-out point 305) either when the air supplied to the flame falls below a flame threshold value or when the purge gas reaches the flame. Thus, in various embodiments, the flame-out point 305 can be made to occur at a selected time.

At 309, the purge gas is the swept through the gas turbine manifold to displace remaining fuel. Valves 205a-d are opened to allow the purge gas into the gas turbine to flow out the exhaust of the HRSG using the coast down airflow. Valve 202 can be closed to prevent upstream flow of the purge gas during the purge process. In various embodiments, the fuel in the gas turbine manifold is diluted until the level of fuel falls below a designated value. Various parameters can be measured to ensure that residual fuel and/or volatile gases are below selected levels and/or are swept from volatile areas of the gas turbine to low temperature or non-volatile areas of the generator. In an alternate embodiment, the purge gas can be swept through the generator manifold beginning at flame-out 305. A test of the fuel system 106 is generally performed after a successful purge of the generator.

At time 311, a valve configuration of the fuel system is set in order to prevent leaks of fuel and to prepare the fuel system for a startup sequence. The fuel pressure plug is typically formed to provide pressure cavity 230 at a selected pressure and the pressure in pressure cavity 220 held at a low pressure through vent valve 203 to atmosphere. Successful completion of the valve test, displacement of remaining fuel and the formation of a leak free shutoff therefore generates a "ready to start" condition indicating that the system is in a prepared state for a startup sequence. Exemplary time 313 indicates the beginning of a startup sequence once the "ready to start" condition is achieved.

Therefore, in one aspect, the present disclosure provides a method of shutting down a generator to prepare the generator for restart, the method including: initiating a power down sequence of a gas turbine of the generator from an operating state; forcing a purge gas into the gas turbine to extinguish a combustion flame in the gas turbine; and sweeping the purge gas through the gas turbine to displace the fuel from the gas turbine using a coast down airflow through the gas turbine during the power down sequence to prepare the generator for restart. Initiating the power down sequence can be part of either a planned shutdown sequence or in response to a tripping signal. Fuel is isolated at a fuel system coupled to the gas turbine, and the isolated fuel is forced from the fuel system using the purge gas. A pressure plug can be formed at the fuel system after sweeping the purge gas through the gas turbine. In one embodiment, the combustion flame is extinguished at a predetermined time after initiation of the power down sequence. The predetermined time can be based on either a selected air pressure of airflow in the generator or a time at which the purge gas reaches the combustion flame. The purge gas can include at least one of nitrogen and compressed air and can be provided from either a combined cycle generator plant or a dedicated purge gas supply system. The generator is considered ready for restart when a measured concentration of the fuel in the generator falls below a selected threshold. The generator can also be considered ready for restart upon performing at least one of: 1) extinguishing the flame in the generator, 2) testing valves in a fuel system, 3) displacing and diluting remaining fuel through the generator using the coast down air flow and a purge gas, and 4) forming a leak-free isolated at the fuel system.

In another aspect, the present disclosure provides a generator that includes: a combustion chamber; a fuel system coupled to the combustion chamber configured to provide a purge gas to extinguish a combustion flame in the combustion chamber; and a source of the purge gas configured to provide the purge gas to the fuel system , wherein the purge gas displaces fuel remaining in the generator after the combustion flame is extinguished during a shutdown sequence of the generator, wherein the purge gas is swept through the generator using a coast down airflow of the generator. The shutdown sequence may be a planned shutdown sequence or a shutdown sequence initiated in response to a tripping signal. The fuel system includes a pressure chamber configured to provide the purge gas to the generator. The pressure chamber includes a control valve configured to isolate a fuel at the pressure chamber and an isolation valve configured to allow the purge gas into the pressure chamber. The purge gas forces the isolated fuel from the pressure chamber to extinguish the flame at the combustion chamber. A control unit coupled to the generator can be used to determine a ready to start condition of the generator. The control can determine the ready to start condition when a measured concentration of the fuel in the generator falls below a selected threshold. Also, the control unit can determine the ready to start condition by performing at least one of: 1) extinguishing the flame in the combustion chamber, 2) testing valves in the fuel system, 3) displacing and diluting remaining fuel through the generator using the coast down airflow and a purge gas, and 4) forming a leak-free isolation at the fuel system. The control unit may be further configured to control an inlet guide vane to provide an airflow for purging combustible gases from the generator. The control unit is further configured to perform the extinguishing of the combustion flame at a predetermined time after initiation of a power down sequence. The predetermined time for extinguishing the combustion flame can be based on a selected air pressure of airflow in the generator.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method of shutting down a generator to prepare the generator for restart, comprising
   initiating a power down sequence of a gas turbine of the generator from an operating state;
   forcing a purge gas into the gas turbine to extinguish a combustion flame in the gas turbine; and
   sweeping the purge gas through the gas turbine to displace the fuel from the gas turbine using a coast down airflow through the gas turbine during the power down sequence to prepare the generator for restart.
2. The method of clause 1, further comprising initiating the power down sequence as one of: (i) a planned shutdown sequence; and (ii) in response to a tripping signal.
3. The method of any preceding clause, further comprising isolating a fuel at a fuel system coupled to the gas turbine and forcing the fuel from the fuel system using the purge gas.
4. The method of any preceding clause, further comprising forming a pressure plug at the fuel system after sweeping the purge gas through the gas turbine.
5. The method of any preceding clause, further comprising extinguishing the combustion flame at a predetermined time after initiation of the power down sequence.
6. The method of any preceding clause, wherein the predetermined time for extinguishing the combustion flame is based on one of: (i) a selected air pressure of airflow in the generator; and (ii) a time at which a purge gas reaches the combustion flame.
7. The method of any preceding clause, wherein the purge gas includes at least one of nitrogen and compressed air.
8. The method of any preceding clause, wherein the purge gas is provided from at least one of: (i) a combined cycle generator plant; and (ii) a dedicate purge gas supply system.
9. The method of any preceding clause, further comprising determining a ready to start condition when a measured concentration of the fuel in the generator falls below a selected threshold.
10. The method of any preceding clause, further comprising obtaining a determining a ready to start condition upon performing at least one of: 1) extinguishing the flame in the generator, 2) testing valves in a fuel system, 3) displacing and diluting remaining fuel through the generator using the coast down air flow and a purge gas, and 4) forming a leak-free isolated at the fuel system.
11. A generator, comprising:
   a combustion chamber;
   a fuel system coupled to the combustion chamber configured to provide a purge gas to extinguish a combustion flame in the combustion chamber; and
   a source of the purge gas configured to provide the purge gas to the fuel system, wherein the purge gas displaces fuel remaining in the generator after the combustion flame is extinguished during a shutdown sequence of the generator, wherein the purge gas is swept through the generator using a coast down airflow of the generator.
12. The generator of any preceding clause, wherein the shutdown sequence is initiated from the group consisting of: (i) a planned shutdown sequence; and (ii) a shutdown sequence in response to a tripping signal.
13. The generator of any preceding clause, wherein the fuel system includes a pressure chamber configured to provide the purge gas to the generator, the pressure chamber having a control valve configured to isolate a fuel at the pressure chamber and an isolation valve configured to allow the purge gas into the pressure chamber.
14. The generator of any preceding clause, wherein the purge gas forces the isolated fuel from the pressure chamber to extinguish the flame at the combustion chamber.
15. The generator of any preceding clause, further comprises a control unit coupled to the generator configured to determine a ready to start condition of the generator.
16. The generator of any preceding clause, wherein the control unit determines the ready to start condition when a measured concentration of the fuel in the generator falls below a selected threshold.
17. The generator of preceding clause, wherein the control unit is configured to determine the ready to start condition upon performing at least one of: 1) extinguishing the flame in the combustion chamber, 2) testing valves in the fuel system, 3) displacing and diluting remaining fuel through the generator using the coast down airflow and a purge gas, and 4) forming a leak-free isolation at the fuel system.
18. The generator of any preceding clauses, wherein the control unit is further configured to control an inlet guide vane to provide an airflow for purging combustible gases from the generator.
19. The generator of any preceding clause, wherein the control unit is further configured to perform the extinguishing of the combustion flame at a predetermined time after initiation of a power down sequence.
20. The generator of any preceding clause, wherein the predetermined time for extinguishing the combustion flame is based on a selected air pressure of airflow in the generator.

## Claims

1. A method of shutting down a generator to prepare the generator for restart, comprising
initiating a power down sequence of a gas turbine (102) of the generator from an operating state;
forcing a purge gas into the gas turbine to extinguish a combustion flame in the gas turbine (102); and
sweeping the purge gas through the gas turbine (102) to displace the fuel from the gas turbine using a coast down airflow through the gas turbine during the power down sequence to prepare the generator for restart.

2. The method of claim 1, further comprising initiating the power down sequence as one of: (i) a planned shutdown sequence; and (ii) in response to a tripping signal.

3. The method of claim 1 or claim 2, further comprising isolating a fuel at a fuel system (106) coupled to the gas turbine (102) and forcing the fuel from the fuel system using the purge gas.

4. The method of claim 3, further comprising forming a pressure plug at the fuel system (106) after sweeping the purge gas through the gas turbine (102).

5. The method of any preceding claim, further comprising extinguishing the combustion flame at a predetermined time after initiation of the power down sequence, wherein the predetermined time for extinguishing the combustion flame is based on one of: (i) a selected air pressure of airflow in the generator; and (ii) a time at which a purge gas reaches the combustion flame.

6. The method of any preceding claim, further comprising determining a ready to start condition when a measured concentration of the fuel in the generator falls below a selected threshold.

7. The method of claim 6, further comprising obtaining a determining a ready to start condition upon performing at least one of: 1) extinguishing the flame in the generator, 2) testing valves in a fuel system, 3) displacing and diluting remaining fuel through the generator using the coast down air flow and a purge gas, and 4) forming a leak-free isolated at the fuel system.

8. A generator, comprising:
a combustion chamber (110);
a fuel system (106) coupled to the combustion chamber configured to provide a purge gas to extinguish a combustion flame in the combustion chamber; and
a source (240) of the purge gas configured to provide the purge gas to the fuel system (106), wherein the purge gas displaces fuel remaining in the generator after the combustion flame is extinguished during a shutdown sequence of the generator, wherein the purge gas is swept through the generator using a coast down airflow of the generator.

9. The generator of claim 8, wherein the shutdown sequence is initiated from the group consisting of: (i) a planned shutdown sequence; and (ii) a shutdown sequence in response to a tripping signal.

10. The generator of claim 8 or claim 9, wherein the fuel system (106) includes a pressure chamber configured to provide the purge gas to the generator, the pressure chamber having a control valve configured to isolate a fuel at the pressure chamber and an isolation valve configured to allow the purge gas into the pressure chamber, wherein preferably the purge gas forces the isolated fuel from the pressure chamber to extinguish the flame at the combustion chamber.

11. The generator of claim 8, 9 or 10, further comprises a control unit (140) coupled to the generator configured to determine a ready to start condition of the generator.

12. The generator of claim 11, wherein the control unit (140) determines the ready to start condition when a measured concentration of the fuel in the generator falls below a selected threshold.

13. The generator of claim 11 or claim 12, wherein the control unit (140) is configured to determine the ready to start condition upon performing at least one of: 1) extinguishing the flame in the combustion chamber, 2) testing valves in the fuel system, 3) displacing and diluting remaining fuel through the generator using the coast down airflow and a purge gas, and 4) forming a leak-free isolation at the fuel system.

14. The generator of claim 11, 12 or 13, wherein the control unit (140) is further configured to control an inlet guide vane (109) to provide an airflow for purging combustible gases from the generator.

15. The generator of claim 11, 12, 13 or 14, wherein the control unit (140) is further configured to perform the extinguishing of the combustion flame at a predetermined time after initiation of a power down sequence, wherein preferably the predetermined time for extinguishing the combustion flame is based on a selected air pressure of airflow in the generator.
